# EUROPEAN PATENT APPLICATION

(11) **EP 4 535 235 A1**
(43) Date of publication of application: **09.04.2025**
(21) Application number: 24204512.8
(22) Date of filing: 03.10.2024
(51) Int. Cl.: G06N 3/045, G06N 3/08, G06N 20/00, G06V 30/412

(54) **METHODS AND SYSTEMS FOR MACHINE-LEARNING BASED DOCUMENT PROCESSING**

(30) Priority: 04.10.2023 US 202318480741
(71) Applicant: Highradius Corporation, Houston, TX 77079 (US)
(72) Inventor: VANKINA, Lohit, 500081 Hyderabad (IN); SARKAR, Nilotpal, 500081 Hyderabad (IN); SEN, Niladri, 500081 Hyderabad (IN); CHOUDHURY, Kunal, 500081 Hyderabad (IN); CHOURASIA, Nupoor, 500081 Hyderabad (IN); SINGH, Gautam, 500081 Hyderabad (IN); BANDYOPADHYAY, Archishman, 500081 Hyderabad (IN); GUPTA, Sumit, 500081 Hyderabad (IN)
(74) Representative: Mewburn Ellis LLP

(57) **Abstract**

The present invention is related to data processing methods and systems thereof. According to an embodiment, the present invention provides a method of processing documents using a machine learning model. The process begins by accessing data files and extracting information from them, which is subsequently stored. This document information, along with the machine learning model trained on various document formats, is used to classify the data files and generate tabular data. From this tabular data, data objects are created and included in an output data file. The information from the output file is then used to update the data of the machine learning model, optimizing it for improved future document processing. There are other embodiments as well.

## Description

### CROSS-REFERENCES TO RELATED APPLICATIONS

The present application is related to U.S. Application No. 18/480741, entitled "Deduction Claim Document Parsing Engine", filed October 4, 2023, which is commonly owned and incorporated by reference herein for all purposes.

### BACKGROUND OF THE INVENTION

For businesses nowadays, processing a substantial volume of financial documents, such as invoices, claims, remittances, bill-of-lading, proof-of-delivery, among others, is necessary. The information within these documents is pivotal for functions like audit, compliance, and analysis. However, the lack of industry-standard layouts or formats for these documents, which can arrive in an assortment of formats and file types, including pdf, doc, spreadsheet, and image, complicates this process.

Traditionally, the bulk of these documents are manually processed by large finance teams. This team's responsibilities involve feeding the document details into accounting systems, a process that is not only tedious but also prone to errors and expensive. Manual processing of such extensive datasets leads to inefficient usage of computing and storage resources.

Current solutions, such as general-purpose document parsing software and Optical Character Recognition (OCR) systems, have been employed to parse financial documents. Nevertheless, these come with their own set of disadvantages, such as development of template specific configurations and processing speed..

It is to be appreciated that embodiments of the present invention provide machine learning-based methods and systems for automating the parsing and extraction of data from various documents, such as financial documents.

### BRIEF SUMMARY OF THE INVENTION

The present invention is related to data processing methods and systems thereof. According to an embodiment, the present invention provides a method of processing documents using a machine learning model. The process begins by accessing data files and extracting information from them, which is subsequently stored. This document information, along with the machine learning model trained on various document formats, is used to classify the data files and generate tabular data and key-value pair data. From this tabular and key-value pair data, data objects are created and included in an output data file. Feedback on the information from the output file is then used to update the data of the machine learning model, optimizing it for improved future document processing. There are other embodiments as well.

According to an embodiment, the present invention provides a method for processing documents. The method includes accessing data files. The method also includes extracting document information from the data files. The method further includes storing the document information at a data storage. The method additionally includes classifying the data files using at least the document information and a machine learning model to generate tabular data and non-tabular data. The machine learning model is trained using a plurality of document formats. The method also includes transforming the tabular data into columns, rows and corresponding values. The method also includes transforming the non-tabular data into key and value pairs. The method additionally includes generating data objects using at least one of the tabular data and non-tabular data. The method also includes providing an output data file comprising the data objects. The method also includes updating the machine learning data using at least the output data file.

According to another embodiment, the present invention provides a method for processing documents. The method includes extracting document information from data files by a data extraction module. The method also includes classifying the data files using at least the document information and a machine learning model to generate tabular data or non-tabular data, the machine learning model being trained using a plurality of document formats. The method also includes generating data objects using the tabular data or non-tabular data. The method also includes providing an output data file comprising the data objects. The method also includes providing an accuracy assessment by comparing the output data file to reference data or ground truth data. The method also includes modifying the machine learning model using at least the accuracy assessment.

According to yet another embodiment, the present invention provides a machine learning based computing system for processing documents. The machine learning (ML) based computing system includes one or more hardware processors. The system also includes a memory coupled to the one or more hardware processors, wherein the memory comprises a plurality of modules in the form of programmable instructions executable by the one or more hardware processors, and wherein the plurality of modules comprises:
a document acquisition module configured to handle the input of the data files in the computing system;
a document scraper module configured for parsing and scraping data from the document;
a content processing module configured for grouping or de-grouping words and phrases found in financial documents;
a noise removal module configured to remove unwanted or irrelevant data from text data;
a content classification ML module configured to extract information from financial documents and classify the extracted information into tabular data and key-value pair data;
a tabular data extraction rule module configured to identify, extract and transform any tabular content present in this labeled content of the document into their columns, rows and corresponding values;
a key value pair data extraction rule module configured to identify and extract keys present in the labeled content and map them to their corresponding values in the document; and
a data output module configured to represent the extracted data to the users and updates other databases with the extracted information.

It is to be appreciated that embodiments of the present invention provide many advantages over conventional techniques. Among other features, embodiments of the present invention allow for accessing and extracting information from various data files and storing it in different types of data storage systems provides extensive flexibility and adaptability. It can handle diverse claim and remittance document formats, making it useful across a wide range of applications and industries, including financial, retail, manufacturing, academic, healthcare, legal, and more. It is to be appreciated that embodiments of the present invention are not restricted by the type of memory storage in use, whether it be a hard disk, nonvolatile memory, a database, or a server connected to a network. This scalability ensures compatibility with various infrastructures, improving its adaptability in different contexts.

Embodiments of the present invention use machine learning models for document content classification and data extraction to provide a significant advantage. These models, trained on a multitude of document formats, can accurately and efficiently generate tabular data and key-value pair data from a vast array of documents. In certain embodiments, the methods and systems of the present invention are specifically configured for data extraction from deduction claim documents and remittance documents. The machine learning model's ability to continually learn and update itself using output data files leads to continuous improvement in its performance, reducing the possibility of errors over time. This machine learning feature also facilitates automatic adaptation to new or changed document formats, reducing the need for manual intervention. Moreover, the system's ability to remove noise from document information enhances the accuracy of data extraction. This feature is particularly crucial when dealing with vast volumes of data, where manual error correction would be time-consuming and resource-intensive. Additionally, the generation of data objects facilitates easy interpretation and utilization of extracted data. Various embodiments also enable removal of non-tabular data from the table, ensuring that the extracted data is concise and relevant. Furthermore, the ability to determine table structure based on the tabular data is an innovative feature that increases the versatility of the system, enabling it to handle complex document structures.

The capability to provide an accuracy assessment by comparing the output data file with reference or ground truth data is another crucial advantage. This feature allows for immediate error identification, enabling the machine learning model to be promptly modified for improved accuracy. The method's capacity to identify error patterns associated with the output data file and subsequently adjust the machine learning model or the data extraction module leads to improved system performance over time. Various embodiments' ability to produce an evaluation report, which highlights error patterns and distributions associated with the output data file, offers a valuable tool for system improvement. This function enables the identification of recurring errors, allowing targeted modifications to enhance system performance. Furthermore, certain embodiments' capacity to format the output data file to fit a database structure, and its ability to classify data files into various categories, provides users with more structured and usable outputs.

The present invention achieves these benefits and others in the context of known technology. However, a further understanding of the nature and advantages of the present invention may be realized by reference to the latter portions of the specification and attached drawings.

### BRIEF DESCRIPTION OF THE DRAWINGS

Figure 1 is a simplified diagram illustrating a data processing system 100 according to embodiments of the present invention.
Figure 2 is a simplified flow diagram illustrating a process for tabular data according to embodiments of the present invention.
Figure 3 is a simplified flow diagram illustrating a process for table extraction according to embodiments of the present invention.
Figure 4 is a simplified flow diagram illustrating a process for key-value pair extraction according to embodiments of the present invention.
Figure 5 provides a simplified diagram illustrating the method of extraction of tabular and key-value pair data from financial documents utilizing the systems and methods of this invention.

### DETAILED DESCRIPTION OF THE INVENTION

The present invention is related to data processing methods and systems thereof. According to an embodiment, the present invention provides a method of processing documents using a machine learning model. The process begins by accessing data files and extracting information from them, which is subsequently stored. This document information, along with the machine learning model trained on various document formats, is used to classify content of the data files and generate tabular data and key-value pair data. From this tabular data, data objects are created and included in an output data file. Further, from the key-value pair data, data objects are created and included in an output data file. Feedback on the information from the output file is then used to update the data of the machine learning model, optimizing it for improved future document processing. There are other embodiments as well.

The following description is presented to enable one of ordinary skills in the art to make and use the invention and to incorporate it in the context of particular applications. Various modifications, as well as a variety of uses in different applications will be readily apparent to those skilled in the art, and the general principles defined herein may be applied to a wide range of embodiments. Thus, the present invention is not intended to be limited to the embodiments presented, but is to be accorded the widest scope consistent with the principles and novel features disclosed herein.

In the following detailed description, numerous specific details are set forth in order to provide a more thorough understanding of the present invention. However, it will be apparent to one skilled in the art that the present invention may be practiced without necessarily being limited to these specific details. In other instances, well-known structures and devices are shown in block diagram form, rather than in detail, in order to avoid obscuring the present invention.

The reader's attention is directed to all papers and documents which are filed concurrently with this specification and which are open to public inspection with this specification, and the contents of all such papers and documents are incorporated herein by reference. All the features disclosed in this specification, (including any accompanying claims, abstract, and drawings) may be replaced by alternative features serving the same, equivalent or similar purpose, unless expressly stated otherwise. Thus, unless expressly stated otherwise, each feature disclosed is one example only of a generic series of equivalent or similar features.

Furthermore, any element in a claim that does not explicitly state "means for" performing a specified function, or "step for" performing a specific function, is not to be interpreted as a "means" or "step" clause as specified in 35 U.S.C. Section 112, Paragraph 6. In particular, the use of "step of" or "act of" in the Claims herein is not intended to invoke the provisions of 35 U.S.C. 112, Paragraph 6.

Please note, if used, the labels left, right, front, back, top, bottom, forward, reverse, clockwise and counter clockwise have been used for convenience purposes only and are not intended to imply any particular fixed direction. Instead, they are used to reflect relative locations and/or directions between various portions of an object.

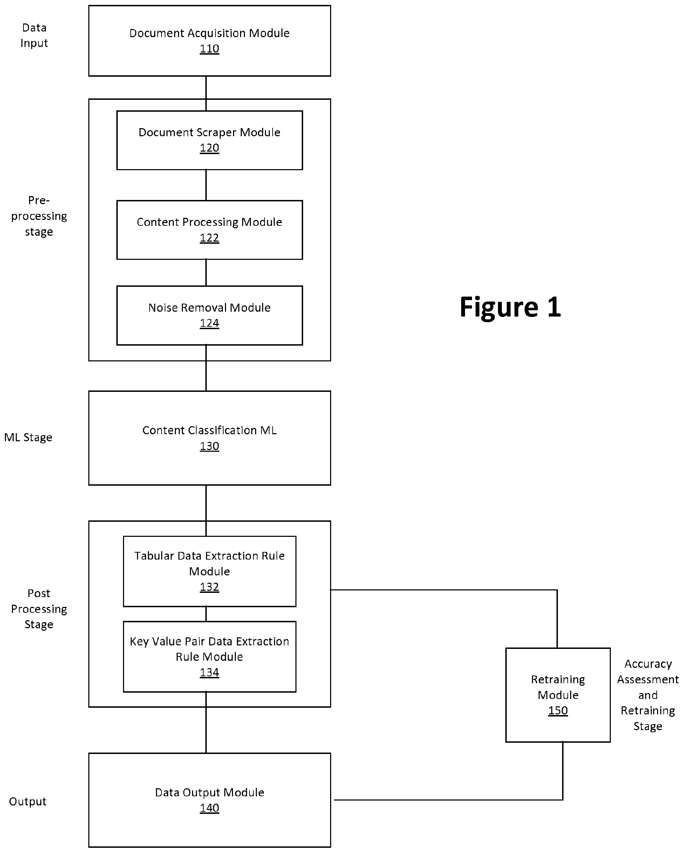

Figure 1 is a simplified diagram illustrating a data processing system 100 according to embodiments of the present invention. This diagram is merely an example, which should not unduly limit the scope of the claims. One of ordinary skill in the art would recognize many variations, alternatives, and modifications.

As an example, system 100 includes components of the machine learning based system for parsing and extracting tabular and non-tabular data are as follows:

| **Stage** | **Component/ Module** | **Remarks** |
|---|---|---|
| Data Input | Document Acquisition Module (110) | • The document acquisition module is configured to handle the input of the data files. |
| Pre-processing stage | Document Scraper module (120) | • The Document Scraper Module is configured for parsing and scraping data from the document. The Document Scraper Module can scrape words, phrases, numbers and special characters along with relevant metadata. |
| | Content Processing Module (122) | • The Content Processing Module is configured to group or de-group words and phrases found in financial documents. |
| | Noise Removal Module (124) | • The Noise Removal Module is configured to remove unwanted or irrelevant data from text data. |
| ML stage | Content Classification ML Module (130) | • A fine-tuned LayoutLM v1 model has been trained to extract information from financial documents, and classify them into tabular data and non-tabular (key-value pair data). |
| Post-processing | Tabular Data Extraction Rule Module (132) | • The Tabular Data Extraction Rule Module is based on parameter-driven rules and configured to identify, extract and transform any tabular content present in this labeled content of the document into their columns, rows and corresponding values. Data objects are generated based on the tabular data which are included in an output data file. |
| | Key Value Pair Data Extraction Rule Module (134) | • The Key Value Pair Data Extraction Rule Module is based on parameter-driven rules and configured to identify and extract keys present in the labeled content and map them to their corresponding values in the document. Data objects are generated based on the non-tabular (key-value pair) data which are included in an output data file. |
| Output | Data Output Module (140) | • Represents the extracted data to the users and updates other databases with the extracted information. |
| Accuracy Assessment & Re-training | Retraining Module (150) | • Evaluates the accuracy of data extraction from financial documents and provides feedback/re-training capabilities for continuous improvement. |

As an example, terms "module" and "stage" are understood to encompass a functional component of a system, which may be implemented in software, hardware, or a combination of both. A module implemented in software may include but is not limited to a subroutine, a function, a procedure, an object, a class, an instance, a sequence of instructions or a part of a software program. The software may be stored on a non-transitory computer-readable medium and may be executed by one or more processors of a computing device. On the other hand, a module implemented in hardware may include but is not limited to a circuit, an integrated circuit, a microcontroller, a microprocessor, a system-on-chip (SoC), a field-programmable gate array (FPGA), or other custom or commercially available hardware components or devices, or a combination thereof. A module may also be implemented as a combination of software and hardware components, where the software controls, instructs, or otherwise interfaces with the hardware to perform the intended functionalities of the module. It will be appreciated that the decision as to whether to implement a module in hardware or software, or a combination thereof, would be driven by the cost and performance considerations that are well-known in the art.

It is understood that a "module" or a "stage" as used herein refers to an abstract functional component and may be distributed among different hardware and software components in various locations and systems, and is not limited to a single functional component located in a single location.

According to various embodiments, document acquisition module 110 is configured to manage and facilitate the import of data files. For example, module 110 may have the capability to support an extensive range of document formats including, but not limited to, PDF, spreadsheets, text documents, images, HTML, XML, CSV files, and others commonly employed in financial systems. Module 110 can also process documents written in various Latin script languages such as English, French, Spanish, and more. In various implementations, module 110 offers an interactive interface that enables manual document uploads by users. This user interface includes validation and error-checking mechanisms to ensure the uploaded files adhere to supported formats. The system provides users with immediate feedback if the uploaded document's format is incompatible.

In certain embodiments, the document acquisition module 110 is configured to manage and facilitate the import of data files pertaining to deductions claim documents and remittances. Deduction claim documents are a written record or form submitted by a customer or entity to a company or business, outlining the details of a deduction request in relation to an outstanding account receivable. Remittance documents are documents that accompany a payment from a customer to a supplier or creditor. Remittance documents provide information about the purpose, amount, and method of the payment, as well as the details of the sender and the receiver. Remittance documents help to ensure that the payment is credited correctly and that the accounts are reconciled properly.

In some embodiments, module 110 can autonomously retrieve documents from an integrated database, like a financial data repository. Regardless of the format or language in which these documents are stored, the module can automatically identify and extract pertinent ones.

For example, the document acquisition module 110 can identify and extract financial documents. In order to search, find, and/or extract financial documents the document acquisition module 110 can look for documents with specific features. In a non-limiting example, the document acquisition module 110 can search for documents and extract documents comprising at least one of customer information, entity information, invoice information, deduction claim information, remittance information, supporting information, contact information, signature information, or date information, or the like.

The customer information or entity information can include, without limitation, at least one of a name, an address, contact details (e.g., phone number, email address, or the like) of the customer or entity making the claim, or the like. The invoice information can include, without limitation, at least one of an invoice number, a date, an amount related to the disputed transaction, or the like. The deduction claim information or remittance information can include, without limitation, at least one of a reason for the claim, a description of an issue or error, dispute information, an amount being withheld, a claim document number, a claim number, a reference number, or the like. Supporting information can include any relevant documents, such as receipts, bills, statements, delivery records, or correspondence, which support the customer's claim, or the like. Contact information can include, without limitation, a name, phone number, email, address, or the like associated with a person or entity that can help resolve a deduction claim. Signature information can include a customer's signature. Date information can include a date a claim was submitted, a date goods were delivered, a data when invoice was raised, a date when an issue was found, or the like.

In some cases, in order to search for and identify one or more claim deduction documents, the document acquisition module 110 can look for specific keywords associated with deduction claims. In a non-limiting example, these terms might include, without limitation, damage, defect, discrepancy, reduction, deduction, amount withheld, claim, dispute, or the like.

In some implementations, module 110 may be configured to pull documents from external databases via Application Programming Interfaces (APIs). It is designed to handle a wide variety of APIs used for accessing financial documents in diverse formats and languages. User authentication and secure document access are safeguarded during this process, and the module offers feedback if an incompatible document format is detected.

Depending on the implementation, module 110 may be configured for extracting documents from emails by monitoring a specific email account and processing attachments. It includes validation checks to verify the compatibility of document formats, and also maintains secure access protocols to ensure the confidentiality of the information contained within the emails. Module 110 may be designed to provide feedback to the user if an attached document's format is not supported by the system.

In some cases, the document acquisition module 110 can monitor a specific email account for financial documents. In order to do this, the document acquisition module 110 can monitor the email account, email messages (e.g., body or subject line of an email) attachments to the emails, or the like for specific information (e.g., at least one of customer information, entity information, invoice information, remittance information, deduction claim information, supporting information, contact information, signature information, or date information, or the like) or specific key words. When one or more claim financial documents are identified, the document acquisition module 110 can extract the one or more financial documents and store the one or more financial documents.

As an example, module 110 can be physically embodied in several different forms of hardware. This can include servers, which provide the necessary computational capacity and data storage capabilities required by Module 110. These servers could be single machines or form part of a distributed network, which can be located either on-premises or in a cloud environment. Various data storage devices may also be incorporated, such as Hard Disk Drives (HDDs), Solid-State Drives (SSDs), or Network-Attached Storage (NAS) devices. Module 110 may be implemented with network equipment, including routers, switches, and firewalls, to enable network communication and data transfer protocols. These components assist in maintaining connectivity between Module 110, other modules in the system, databases, and external APIs, while also ensuring the secure transmission of data. For manual user interaction with module 110, various input/output devices such as keyboards, mice, touchscreens, monitors, or printers may be utilized. These devices allow users to upload documents to Module 110 and receive feedback about the processing status. In situations where physical documents are to be digitized, scanner devices may be employed. Depending on the implementation, security may be a concern for module 110, and as such, dedicated security hardware, such as hardware-based firewalls or secure servers, may be used to safeguard sensitive data. For certain applications, module 110 interfaces with third-party APIs, and an API gateway device could be used to manage, route, and secure API calls effectively.

The pre-processing stage includes, among other components, a document scraper module 120, which is configured for processing documents. Document scraper Module 120 is configured to parse and extract data from the input document. The type of data that Document scraper Module 120 can extract is not limited to mere text, but also encompasses numbers, special characters, and relevant metadata. As an example, general-purpose document parsing solutions such as open-source PDF parsers or Image OCR libraries in Python may be used to read the text characters from the document. These tools are also equipped to extract associated information including, but not limited to, coordinates, encoding, font details (e.g., color, size, highlights, bolded, underlined, italicized, or the like), font styles (e.g., arial, times new roman, or the like), and text rotations.

Subsequent to data extraction, Document Scraper module 120 stores the acquired data in a configurable structured format, which could be a scraper document database or file that can be updated dynamically. This storage can take place in a relational or a NoSQL database, local or cloud-hosted, or in a flat file format such as CSV or JSON. Depending on the implementation, the type of data that can be found in a file and extracted by document scraper module 120 is multitudinous, including textual data (e.g., textual data in multiple languages, textual data of different fonts, sizes, colors, styles, or the like), image data (e.g., images embedded within a document, images referenced within a document, images linked within a document, JPG, PNG, GIF, TIFF, or the like), annotations (e.g., comments, highlights, bookmarks, author of the comments, author of the highlights, author of the bookmarks, etc.), links (e.g., links to other documents, images, web pages, media files, or the like), and metadata.

For example, each file's metadata varies, including details such as font information (e.g., color, size, or the like), character encoding (e.g., Unicode or ASCII or the like), character and paragraph styles (e.g., bolded, underlined, italicized, numbered, or the like), word, and line, and paragraph spacing (e.g., amount of space between words, lines, paragraphs, or the like), paragraph styles (e.g., indentation, justified, or the like), text positioning (e.g., location of text, words, letters, sentences, paragraphs, etc. on page, coordinates of text, words, letters, sentences, paragraphs, etc. on page, or the like), text flow (e.g., direction of text such as right to left or left to right or the like), language, annotations or comments (e.g., notes, highlights, author of notes or highlights, or the like), tags (e.g., header, footer, or the like), hyperlinks (e.g., links to other documents, images, web pages, media files, or the like), bookmarks (e.g., links to specific locations within a document, or the like), or the like., and comments.

In various embodiments, in the context of spreadsheet type files, the metadata may also consist of cell formatting (e.g., font size, color, alignment, cell size, etc.), cell styles (e.g., number, currency, header, title, text, etc.), worksheet metadata (e.g., name of worksheet, author, date created, date modified, etc.), data validation rules (e.g., one or more rules for each cell, specific data types, etc.), and formulas (e.g., formula itself, range of cells used in calculation, etc.). Similarly, for image type files, the metadata could comprise information about image dimensions (e.g., height, width, etc.), image format (e.g., JPG, PNG, TIFF, etc.), color profile (e.g., black and white, color, color space used in image, sRGB, Adobe RGB, etc.), resolution (e.g., number of pixels per inch or per centimeter, etc.), and compression (lossless, lossy, etc.).

As an example, document scraper module 120 can be implemented across various hardware configurations based on the scale of operation and specific needs. For regular tasks, it can operate on standard personal computers equipped with a multicore CPU, ample RAM, and substantial storage. In high-volume scenarios, it could run on server clusters featuring multiprocessor systems, extensive RAM, and considerable storage capacities. For high-performance tasks, specialized hardware like high-performance GPUs, ASICs, or FPGAs can be utilized for their parallel processing capabilities.

The content processing module 122, not shown in Figure 1, is configured to receive and process the scraped information from the preceding stages. The module may include a rule engine that has the capability to receive and store a variety of custom rules related to the processing of financial documents. The custom rules assist in grouping or de-grouping words and phrases based on certain criteria such as the part of speech of the words and phrases, the relationship among them, and their semantic meaning. The rule engine applies these rules considering the distances and properties of characters, enabling the grouping of text characters into coherent words and phrases. For example, "Invoice Number" is considered a single phrase composed of two words, whereas "Vendor Item description" is partitioned into a word and a phrase, namely "Vendor" and "Item description".

Following the content processing module 122, the output is directed towards the noise removal module 124 (not shown in Figure 1). The noise removal nodule may be configured around a rule engine, which may be configured to receive and store a diverse set of custom rules for noise removal, specifically tailored to financial documents. As an example, noise removal rules facilitate various operations, such as replacing each CID character in the content with its respective unicode string value, eliminating all punctuation marks that precede any phrase in the content, and discarding recurring special characters which are typically used as section separators within the content. Implementation of these rules by the noise removal module can help ensure that the output content is devoid of noise, thereby readying it for subsequent stages of processing.

As an example, content classification machine learning (ML) module 130 is configured to classify data received from the previous stage. In various embodiments, ML module incorporates a fine-tuned transformer-based natural language processing (NLP) model, specifically LayoutLM v1, which is trained to classify content entities such as words and phrases into tabular and non-tabular data. This model may be implemented using established open-source libraries, such as Python libraries. As an example, the "LayoutLM v1" transformer-based model operates as the fundamental layer. This model applies the semantic, syntactic, and location context of document entities to classify them into non-tabular keys, non-tabular values and tabular data. The tabular data comprises both tabular keys and tabular values. The "LayoutLM v1" model modifies the BERT architecture to include 2-D positional information (x and y coordinates of words within the document) as additional input embedding layers. For example, BERT is a multi-layer bidirectional transformer encoder that accepts a sequence of tokens and combines multiple layers to yield the final representations. In some implementations, the pre-training of "LayoutLM v1" ML model employs the IIT-CDIP Test Collection 1.02 which encompasses more than 6 million scanned documents and 11 million scanned document images from a diverse range of categories. This model may be, as an example, pre-trained on "Masked Visual-Language Model (MVLM)" and "Multi-label Document Classification (MDC)" tasks simultaneously.

In some embodiments, the "LayoutLM v1" model uses the "WordPiece" tokenizer to generate tokens of words in the document. For example, the fine-tuning of the base "LayoutLM v1" model may be carried out using 1000 unique document formats, including both text-based PDFs and images. These documents cover various domains such as . healthcare, retail, technology, manufacturing, financial services, transportation, hospitality, pharmaceutical, energy, construction, agriculture, entertainment, education, telecommunications, aerospace/defense, chemicals, government, business services and the like.

In some implementations, the tokenizer used in the base model may be modified to more accurately represent the context of certain kinds of data frequently found in financial documents, such as claim and remittance documents. These modifications include the addition of a special token for interpreting currency characters (replacing symbols such as $, £, etc. with [CUR] token), and special tokens for interpreting amount strings (floating point values are replaced with [SFLT] for "Short float" type data and [LFLT] for "Long float" type data).

As an example, an optimization of the model's learning for better capturing trends and patterns of IR documents is carried out using the "AdamW" optimizer algorithm, configured at a learning rate of 5e-5, with the "cross-entropy" loss function.

Depending on the implementation, module 130 can be implemented on a variety of hardware, depending on computational needs. At its core, a multi-core CPU for parallel processing and substantial RAM for data handling may be used, while large storage capacities may be needed for handling extensive datasets and model outputs. For more demanding tasks, high-performance servers or server clusters can be employed. Specialized hardware like Graphics Processing Units (GPUs) and Tensor Processing Units (TPUs) can considerably enhance the computational performance, especially for the LayoutLM v1 model's operations that benefit from parallel processing capabilities. These units are especially effective for ML tasks such as training and fine-tuning the model, accelerating these processes significantly. For adaptable and scalable solutions, cloud-based platforms may be used, as they offer high-performance computing resources, including ML-specific hardware options that are especially beneficial for extensive ML tasks.

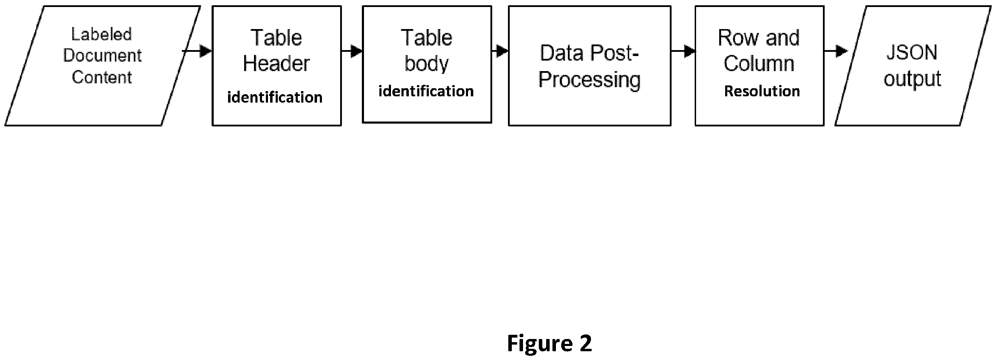

Figure 2 is a simplified flow diagram illustrating a process for tabular data according to embodiments of the present invention. This diagram is merely an example, which should not unduly limit the scope of the claims. One of ordinary skills in the art would recognize many variations, alternatives, and modifications.

As an example, following the content classification step, two parameter-driven rule-engines are employed for the identification, extraction, and transformation of any tabular and non-tabular content within the labeled document content. The first parameter-driven rule engine is the Tabular Data Extraction Rule Module 132, which is configured to identify, extract and transform any tabular content present in this labeled content of the document into their columns, rows and corresponding values. The second parameter-driven rule engine is the Key Value Pair Data Extraction Rule Module 134 which is configured to identify and extract non-tabular data (keys and values). In one embodiment, the keys present in the labeled content are mapped to their corresponding values in the document by the Key Value Pair Data Extraction Rule Module 134.

In a non-limiting embodiment, the tabular data extraction rule module 132 is employed for the identification, extraction, and transformation of any tabular content to any tabular content present in this labeled content of the document into their columns, rows and corresponding values. This conversion into their respective columns, rows, and corresponding values results in the final output, which is generated in a JSON format. As shown in Figure 2, operation of a parameter-driven rule-engine involves multiple sub-steps. Firstly, Table Header Identification is performed where a sequence of tabular keys type entities with the same horizontal alignment is considered to represent the tabular header. Following the identification of table headers, the Table Body Identification process is initiated. Here, rules based on content density and horizontal consistency of patterns are employed to determine the potential last row of the table. Subsequent to table body identification, a Data Post-Processing step is undertaken where non-tabular keys type entities are removed from within the identified table span. Entities such as "Summaries", "Sub Totals", and others are examples of the content eliminated during this step. Next, the Column and Row Resolution step is executed. During this phase, value type entities within the table span are assigned to their corresponding columns and separated into individual rows. In various implementations, rules based on content density, vertical and horizontal alignment are leveraged to achieve this. For example, two key thresholds may play a role in this process: (1) Stepwise Vertical Threshold, which indicates the maximum accepted distance between two vertically adjacent entities belonging to the same phrase, and (2) Stepwise Horizontal Threshold, which indicates the maximum accepted distance between two horizontally adjacent entities belonging to the same phrase. In an example, a parameter indicating the number of columns signifies the minimum number of tabular keys type entities with the same horizontal alignment needed to be recognized as a tabular header. Parameter values may be selected through a comprehensive statistical analysis performed on the annotated training data.

In a non-limiting embodiment, the Key Value Pair Data Extraction Rule Module 134 is employed to identify and extract non-tabular data (keys and values). As an example, the non-tabular keys present in the labeled content are mapped to their corresponding values in the document by the Key Value Pair Data Extraction Rule Module 134. This conversion into their respective key-value pairs in the final output is generated in a JSON format. As shown in Figure 2, operation of the parameter-driven rule-engine involves multiple sub-steps. The first step involves a Search Area Identification step in which for all entities (words / phrases) in the document identified as "Keys" by the content classifier, an area/scope around the keys is heuristically defined which is processed in the subsequent step for finding its associated value. The second step involves a multi-line value identification and merging step. In this step, using content similarity and relative distance-based rules, entities within the identified search space that potentially belong to the same context are merged together. The final step is a Distance and Angle based Shortlisting step. In this step, relative distance and orientation-based rules are used to choose a single merged "value" for the "key" from amongst the options available within the search area.

As an example, parse documents and generate tabular data, document parser module, content classification module, and table extraction and key-value pair extraction modules may be used. As an example, the document parser module forms the initial stage of the process. Depending on the input file format, the module employs existing open-source PDF parser or Image OCR libraries in Python to read text characters and associated metadata such as coordinates, encoding, font, style, and rotations. The module groups these characters into words and phrases based on specific rules dictated by their properties and relative distances. For instance, the string "Invoice Number" is processed as a single phrase encompassing two words, whereas "Vendor Item description" is partitioned into one word and a phrase: "Vendor" and "Item description", respectively. The module incorporates a series of post-processing steps to filter noise, including substituting cid characters with equivalent Unicode string values, eliminating leading punctuation in any phrase, and purging recurring special characters typically used as section separators.

Content classification module, according to various embodiments, employs a fine-tuned Transformer-based Natural Language Processing (NLP) model to classify content entities (words and phrases) into non-tabular keys, tabular keys, and values. For example, the model is implemented using established open-source Python libraries and facilitates precision in the data extraction process.

Tabular Data Extraction Rule Module 132 and Key-Value Pair Data Extraction Rule Module 134 may employ parameter-driven rule engines to discern, extract, and transform any tabular and non-tabular content present in the labeled content of the document into their respective columns, rows, and corresponding values, and key-value pairs providing the final output in JSON format. As an example, the Tabular Data Extraction Rule Module operates through various sub-steps, which may include: Table Header Identification, which considers a sequence of horizontally aligned tabular key type entities as the tabular header; Table Body Identification, which determines the potential last row of the table based on content density and horizontal consistency; Data post-processing, which eliminates non-tabular key type entities from the identified table span; and Column and Row Resolution, which assigns value-type entities within the table span to their respective columns and divides them into rows based on content density, vertical, and horizontal alignment. As an example, the Key-Value Pair Data Extraction Rule Module operates through various sub-steps, which may include: the first step involves a Search Area Identification step in which for all entities (words / phrases) in the document identified as "Keys" by the content classifier, an area/scope around the keys is heuristically defined which is processed in the subsequent step for finding its associated value; the second step involves a multi-line value identification and merging step which uses content similarity and relative distance based rules, entities within the identified search space that potentially belong to the same context are merged together; the final step is a Distance and Angle based Shortlisting step which uses relative distance and orientation based rules, which are used to choose a single merged "value" for the "key" from amongst the options available within the search area.

As an example, machine learning techniques may be to extract tabular and non-tabular structure and content from Claim and Remittance documents. The first one is a Natural Language Processing (NLP) Transfer-Learning based Document Content Classification algorithm. As an example, the algorithm employs a fine-tuned version of the "LayoutLM v1" transformer-based model to classify document entities (words or phrases) into non-tabular keys, tabular keys, and values. This model incorporates the semantic, syntactic, and location context of document entities into its classification process. The "LayoutLM v1" is based on a modified version of the BERT architecture, a multi-layer bidirectional Transformer encoder that intakes a sequence of tokens and outputs the final representations. This modified version of BERT includes 2-D position (x and y coordinates of words within the document) information as additional input embedding layers. The algorithm may be pre-trained on the IIT-CDIP Test Collection 1.02, a dataset with more than 6 million scanned documents and 11 million scanned document images from diverse categories such as letters, memos, emails, forms, and more. This pre-training process involves "Masked Visual-Language Model (MVLM)" and "Multi-label Document Classification (MDC)" tasks. The "WordPiece" tokenizer is used by the model to generate tokens of words in the document.

The model's fine-tuning may be executed with 1000 unique document formats, consisting of both text-based PDFs and images, sourced from various domains such as consumer packaged goods, freight and logistics, pharmaceutical, finance, and IT. Several modifications to the tokenizer may be made, such as adding special tokens for interpreting currency characters and amount strings. Model attributes for hyperparameter tuning are selected, such as embedding layers, encoder layers, and pooler layer. For example, an "AdamW" optimizer algorithm may be used with a learning rate of 5e-5, and a "cross-entropy" loss function with custom class weights is employed.

In some embodiments, a sliding window technique is applied at the time of fine-tuning to allow the model to learn the whole content context within any document, overcoming the limitation of the maximum token sequence length supported by the base model. The sliding window technique generates multiple rows of training data for the same document with intentionally overlapped content across consecutive rows.

In certain embodiments, the fine tuning is achieved by modifying the dropout percentages and modifying the number of hidden layers in the Layout LM model. After iterating over a range of appropriate values, the selected values-as an example-may be:
- Hidden_dropout_prob = 0.16
- Attention_probs_dropout_prob = 0.12
- Classifier_dropout = 0.06
- Num_hidden_layers = 14

In certain embodiments, a new pooler layer of dimension 768 x 4 is introduced for performing classification.

In an implementation, a fine-tuned model is retrained every month using an updated training dataset that includes document samples for which predictions in the preceding month did not perform as expected. This retraining process involves preparing the training data of the additionally identified low-performing samples, appending this additional training data to the previously collected training dataset, and then re-running the fine-tuning of the model using this updated training dataset. This approach continuously improves the model's accuracy and coverage of the captured trends and patterns.

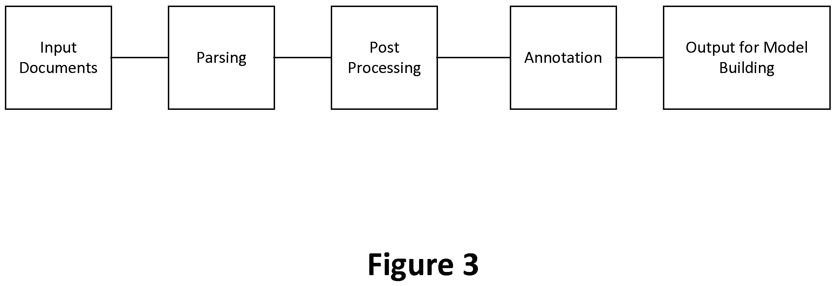

Figure 3 is a simplified flow diagram illustrating a process for table extraction according to embodiments of the present invention. This diagram is merely an example, which should not unduly limit the scope of the claims. One of ordinary skills in the art would recognize many variations, alternatives, and modifications. A second algorithm, a table extraction rule-Engine, designed for identifying and parsing the tabular structure within claim and remittance documents. For example, the methodology of this engine utilizes a set of critical parameters that govern the rule-based calculations. These parameters encompass: a stepwise vertical threshold, defining the maximum acceptable distance between two vertically adjacent entities within the same phrase; a stepwise horizontal threshold, outlining the maximum acceptable distance between two horizontally adjacent entities within the same phrase; and a variable indicating the minimum number of tabular keys type entities that must align horizontally to be identified as a table header. These parameter values are established through rigorous statistical analysis of annotated training data.

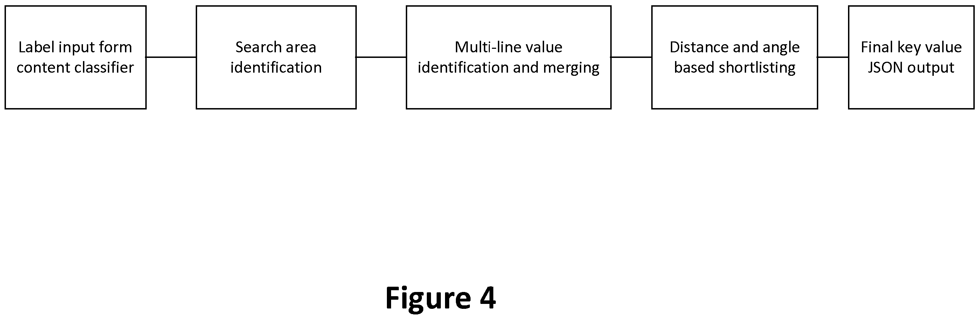

Figure 4 is a simplified flow diagram illustrating a process for key-value pair extraction according to embodiments of the present invention. This diagram is merely an example, which should not unduly limit the scope of the claims. One of ordinary skills in the art would recognize many variations, alternatives, and modifications. A second algorithm, a Key-Value Pair Data Extraction Rule Module, designed for identifying and parsing the key-value pairs within information retrieval (IR) documents. For example, the methodology of this engine utilizes a set of critical parameters that govern the rule-based calculations. These parameters encompass: a first Search Area Identification parameter in which for all entities (words / phrases) in the document identified as "Keys" by the content classifier, an area/scope around the keys is heuristically defined which is processed in the subsequent step for finding its associated value; a second Multi-line Value Identification and Merging parameter which uses content similarity and relative distance based rules, entities within the identified search space that potentially belong to the same context are merged together; a third Distance and Angle based Shortlisting parameter which uses relative distance and orientation based rules, which are used to choose a single merged "value" for the "key" from amongst the options available within the search area. These parameter values are established through rigorous statistical analysis of annotated training data.

For example, to train this algorithm, a diverse collection of around 1000 unique document formats was used, featuring text-based PDFs and images from an array of sectors such as Consumer Packaged Goods, Freight & Logistics, Pharmaceutical, Finance, and IT. The training dataset was generated by methodically processing the corpus of collected documents.

Initially, the raw content and metadata of the document are extracted using a PDF parser or Image OCR, depending on the file format. This extraction process yields text characters along with their related attributes such as coordinates, encoding, font, font style, and text rotations. These characters are then grouped into logical entities, or phrases, based on their locational context.

This is followed by a post-processing stage wherein noise from the input is removed, making the content suitable for data science model building. Steps include readjusting entity coordinates if they occur outside the actual PDF, replacing CID characters with their corresponding Unicode string value, stripping off all punctuations before any phrase, breaking an entity around colons, and removing recurring special characters.

The final stage in training data preparation is annotation. This involves manually augmenting the inputs with additional target variable information required for training the classification and rule-driven models. Data such as whether an entity is tabular/non-tabular key or value, table properties, and key-value properties are added via a custom-built GUI based tool. This holistic approach ensures that the Table Extraction Rule-Engine and Key-Value Pair Rule Engine is meticulously trained and optimized for accurate tabular data extraction from diverse IR documents.

Figure 4 is a simplified diagram illustrating a process for performing key value extraction according to embodiments of the present invention. This diagram is merely an example, which should not unduly limit the scope of the claims. One of ordinary skills in the art would recognize many variations, alternatives, and modifications. Subsequent to the data processing steps, a parameter-driven rule-engine comes into play to identify and extract key entities present in the labeled content and map them to their corresponding values in the document. This operation results in the final output, delivered in the JSON format.

As shown in Figure 3, operation of a parameter-driven rule-engine comprises multiple sub-steps. First, a Search Area Identification step is carried out. Here, for all entities in the document recognized as "Keys" by the content classifier, a heuristic is used to define an area or scope around the entity to be explored to find its associated value. Following the identification of the search area, a Multi-Line Value Identification and Merging step takes place. During this phase, rules based on content similarity and relative distance are employed to merge entities within the identified search space that are likely to belong to the same context. Lastly, a Distance and Angle-Based Shortlisting step is performed. Here, rules based on relative distance and orientation are utilized to select a single merged "value" for the "key" among the options available within the search area. It is to be appreciated that these sub-steps help ensure the accurate and efficient extraction of meaningful data from the document.

Now referring back to Figure 1. Data output module 140 is configured for classification and storage of the data, which may be saved in JSON file. As an example, for data classified as tabular data, the Data output module 140 generates a structured representation, which may be displayed as tables, spreadsheets, or other suitable formats that present the data in a clear and organized manner. Data Output Module 140 may be configured to provide formatting options, such as bolding, italics, colors, and other visual cues to highlight specific data or provide additional context. Data Output Module 140 may further generate metadata, such as column headers, row labels, data types, and other relevant information, to enhance user comprehension.

For data classified as non-tabular data, Data Output module 140 may generates a structured representation, which may be presented as paragraphs, bullet points, lists, or other formats that render the data readable and well-organized. As an example, module 140 may provide formatting options, including adjustments to font size, indentation, and line spacing. Additional features such as hyperlinking, inline definitions, or tooltips may also be incorporated to provide contextual information or facilitate navigation within the non-tabular data.

Data Output Module 140 may provide customization and interactivity features, thereby allowing users to adjust the display of the output according to their preferences. This may include changing formatting options, choosing different visual themes, or applying filters to focus on specific subsets of data. Data Output Module 140, in some implementations, may provide interactive features like sorting, searching, and filtering to allow dynamic exploration and analysis of the displayed data.

In some cases, data output module 160 can either automatically prioritize or order or allow a user to prioritize or order information extracted from one or more financial documents. In a non-limiting example, information from one or more deduction claim documents can be prioritized based on a date (e.g., older dated documents being more likely to shown at a top of a page, newer dated documents being more likely to shown at a top of a page, or the like) of the claim, based on an amount (e.g., larger amounts being more likely to be shown at a top of a page, or the like), based on one or more goods or services associated with the document, or the like.

Data Output Module 140 may be configured to facilitate export and sharing, thus enabling users to export the displayed output in various formats such as PDF, Excel, CSV, or HTML. For example, users can share the output with others, either in its original format or as an exported file, promoting collaboration and knowledge sharing.

In some implementations, Data Output Module 140 is configured for database integration and update, capable of integrating with third-party database systems through connections or appropriate application programming interface (APIs). For example, Data Output Module 140 may support various database types, including relational databases, NoSQL databases, document databases, among others. It is to be appreciated that Data Output Module 140 may be configured to efficiently update the database with the extracted information, maintaining real-time synchronization and data consistency. Data Output Module 140 may also provide mechanisms for error handling, transaction management, and data logging to uphold data integrity and traceability.

Depending on the implementation, modules can be implemented on a multitude of hardware infrastructures tailored to a range of application and usage scenarios. Essential components of the hardware infrastructure for this module comprise a processing unit and a memory unit. The processing unit, which may be a Central Processing Unit (CPU) or a Graphics Processing Unit (GPU), carries out the execution of program instructions. The memory unit provides the storage for these program instructions, incoming data, and processed results.

As an example, Data Output Module 140 can be configured on a server or a cluster of servers. These servers could be designed with multi-core or multi-processor systems, extensive quantities of RAM, and significant storage capacities. They could be housed in a dedicated data center or utilized as part of a cloud computing platform. High-performance requirements may involve implementing Data Output Module 140 on specialized hardware. This hardware could include high-performance GPUs, Application-Specific Integrated Circuits (ASICs), or Field-Programmable Gate Arrays (FPGAs). Such devices can expedite data processing tasks by carrying out specific operations in parallel. Data Output Module 140 may operate in a cloud-based environment, harnessing resources from providers, which provide a scalable solution adaptable to varying workloads, with the benefits of simplified maintenance and reduced upfront costs.

Re-training Module 150 is configured to evaluate and enhance the accuracy of data extraction processes from structured and unstructured documents. In an accuracy assessment process, Re-training Module 150 compares the extracted data with ground truth or reference data to assess its accuracy. This comparison may utilize techniques including, but not limited to, exact matching, fuzzy matching, similarity metrics, or machine learning-based classification. For example, accuracy is quantified using suitable metrics such as precision, recall, or any other relevant measures, providing a comprehensive evaluation of the data extraction process. In some cases, comparing the output data file to reference data or ground truth data comprises comparing one or more data objects in the output data file to at least one customer information, entity information, invoice information, document information, supporting information, contact information, signature information, or date information stored in a data storage and associated with the at least one corresponding tabular or non-tabular keys. In other words, an invoice number extracted from the one or more financial documents can be compared to one or more invoice numbers associated with a seller to confirm that the document is associated with the seller.

Re-training Module 150 may also generate evaluation reports offering insights into the accuracy of the data extraction. These reports encapsulate information on error patterns and distributions across various document types or data elements, and identify the specific types and sources of errors. To facilitate a thorough understanding of the assessment results, these reports encompass visualizations, statistical summaries, and a detailed analysis of errors.

In various embodiments, the feedback generation process is built on the insights from the evaluation reports. Re-training Module 150 identifies patterns or rules contributing to errors and provides actionable recommendations for refinement. This feedback can encompass suggestions for modifying machine learning model parameters, updating data preprocessing techniques, adjusting feature selection, or refining other aspects of the data extraction pipeline.

Feedback incorporation is another function that may be performed by Re-training Module 150. This process facilitates the integration of feedback into the machine learning model and the data extraction pipeline, driving continuous improvement. Interfaces, APIs, or hooks may be used for seamless integration with the data extraction pipeline and facilitate the implementation of feedback. This process could involve retraining the machine learning model, updating preprocessing techniques, adjusting feature selection criteria, or modifying other parameters based on the feedback received.

Re-training Module 150 may provide real-time and automated feedback, operating in real-time or at regular intervals to provide ongoing feedback. It integrates with the data extraction pipeline, automatically assessing accuracy, generating reports, and providing feedback without manual intervention. This may be achieved through APIs, event triggers, or workflow integration, ensuring timely and automated feedback incorporation. In some embodiments, the retraining module 150 is retrained after a predetermined amount of time passes (e.g., a week, a month, etc.) using an updated training dataset that additionally includes document samples for which predictions did not perform as expected. In order to retrain the machine learning models, training data of the identified low performing samples is first collected and then appended to the training data set that was used originally. Fine-tuning of the model is then re-run using this updated training dataset so that the accuracy and coverage of captured trends/patterns is improved.

Re-training Module 150 may provide performance tracking and comparison. For example, this process tracks the performance of the data extraction pipeline over time, capturing changes in accuracy metrics and error patterns. Re-training Module 150 may provide comparisons between different iterations or versions of the machine learning model or data extraction pipeline, assessing the impact of feedback and improvement efforts.

In some implementations, retraining module 150 may be implemented using high-performance processing units for evaluating extracted data accuracy against reference or ground truth data, where high-speed CPUs or dedicated neural processing units (NPUs) may be needed. These processors would handle intense operations like exact matching, fuzzy matching, and similarity metrics computations with efficiency, ensuring rapid feedback cycles. Retraining module 150 may additionally be implemented with expanded memory, wherein integrated high-capacity RAM, combined with fast SSDs, may be used to support the instantaneous access and storage of vast amounts of data, facilitating comparison tasks such as contrasting extracted invoice numbers with stored reference data. Additionally, dedicated graphics processing Unit (GPU) may be used to satisfy the computational demands of machine learning-based classification and model fine-tuning.

Retraining module 150 may also be implemented with advanced data storage solutions to serve varied data elements such as customer details, invoice information, and signature data, scalable storage solutions are paramount. Fast-access storage solutions like NVMe SSDs may be incorporated, ensuring quick retrieval of reference datasets, coupled with long-term storage HDDs for archived reports and historical datasets.

In some embodiments, Retraining module 150 may be implemented with dedicated interfaces, such as FPGA or ASIC implementations, that facilitate feedback assimilation into the data extraction pipeline. These circuits could offer swift adjustments to model parameters, data preprocessing techniques, or feature selection based on real-time or periodic feedback. To allow the module to operate autonomously at predetermined intervals or in real-time, dedicated workflow controller modules may be embedded. These components, possibly developed as ASICs, may be used to automate tasks like model retraining using updated datasets, triggering event-based feedback, and initiating system-wide performance evaluations.

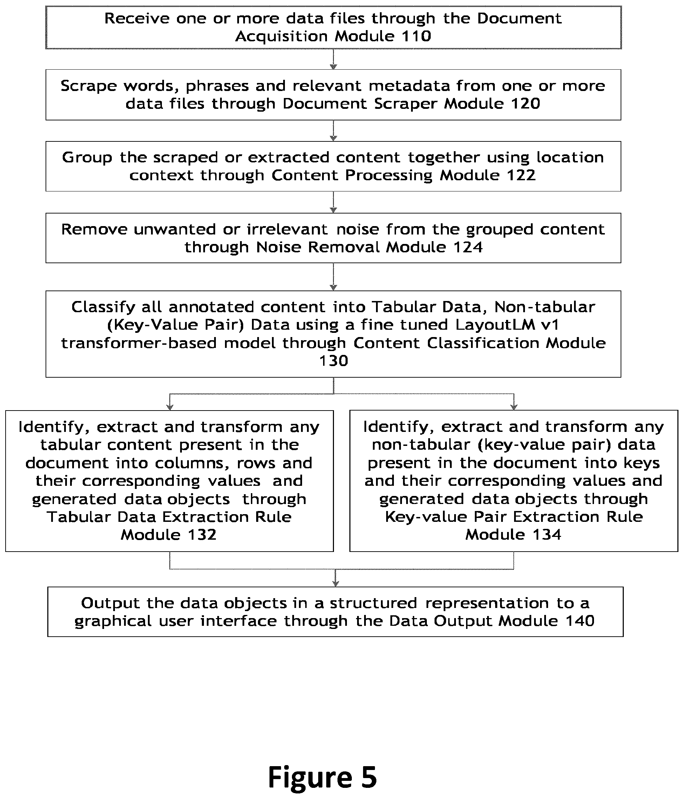

Figure 5 provides a simplified diagram illustrating the method of extraction of tabular and key-value pair data from financial documents utilizing the systems and methods of this invention. This diagram is merely an example, which should not unduly limit the scope of the claims. One of ordinary skills in the art would recognize many variations, alternatives, and modifications. One or more steps may be added, removed, repeated, modified, replaced, rearranged, and they should not limit the scope of the claims.

The first step involves receiving one or more documents through the Document Acquisition Module 110. The document acquisition module is configured to handle the input of the data files.

Subsequent to the document acquisition, the next step involves scraping using the Data Scraper Module 120. The Document Scraper Module 120 is configured for parsing and scraping data from the document. The Document Scraper Module 120 can scrape words, phrases, numbers and special characters along with relevant metadata.

The output of the Data Scraper Module is directed to the Content Processing Module 122. The Content Processing Module 122 is configured to group or de-group words and phrases found in financial documents.

Subsequent to the Content Processing step, the output is directed to the Noise Removal Module 124. The Noise Removal module 124 is configured to remove unwanted or irrelevant data from text data.

Subsequent to Noise Removal Step, the data output is sent to the ML-based Content Classification Module 130. A fine-tuned LayoutLM v1 model has been trained to extract information from financial documents, and classify them into tabular data and non-tabular (key-value pair data) in the Content Classification Module 130.

Subsequently, the data classified as tabular data by the Content Classification Module 130 is directed to the Tabular Data Extraction Module 132. The Tabular Data Extraction Rule Engine 132 is a parameter-driven rule engine configured to identify, extract and transform any tabular content present in the labeled content of the document into their columns, rows and corresponding values.

Simultaneously, the data classified as non-tabular data by the Content Classification Module 130 is directed to the Key Value Pair Data Extraction Rule Module 134. The Key Value Pair Data Extraction Rule Module is 134 a parameter-driven rule engine configured to identify and extract keys present in the labeled content and map them to their corresponding values in the document.

The output from the Tabular Data Extraction Rule Engine 132 and the Key Value Pair Data Extraction Rule Module 134 are used for generating data objects. The data objects are created and included in an output data file.

Finally, the output goes to the Data Output Module 140 which generates a structured representation, which may be displayed as tables, spreadsheets, or other suitable formats that present the data in a clear and organized manner.

While the above is a full description of the specific embodiments, various modifications, alternative constructions and equivalents may be used. Therefore, the above description and illustrations should not be taken as limiting the scope of the present invention which is defined by the appended claims.

## Claims

1. A method for processing documents, the method comprising:
accessing data files;
extracting document information from the data files;
storing the document information at a data storage;
classifying the data files using at least the document information and a machine learning model to generate tabular data and non-tabular data, the machine learning model being trained using a plurality of document formats;
transforming the tabular data into columns, rows and corresponding values;
transforming the non-tabular data into key and value pairs;
generating data objects using at least one of the tabular data and non-tabular data;
providing an output data file comprising the data objects; and
updating the machine learning data using at least the output data file.

2. The method of claim 1, wherein extracting document information further comprises removing noise from the document information.

3. The method of claim 1, wherein the machine learning model comprises a transformer-based model, a bidirectional encoder, or a masked visual-language model.

4. The method of claim 3 wherein the machine learning model is a fine tuned LayoutLM model.

5. The method of claim 1, further comprising classifying the data objects into tabular data or key-value pair data.

6. The method of claim 1, further comprising:
generating a table using the data objects, the table comprising a header that is based at least on the tabular data; and
determining a column resolution and a row resolution based at least on the tabular data.

7. The method of claim 1, further comprising comparing the output data to ground truth data or reference data.

8. A method for processing documents, the method comprising:
extracting document information from data files by a data extraction module;
classifying the data files using at least the document information and a machine learning model to generate tabular data or non-tabular data, the machine learning model being trained using a plurality of document formats;
generating data objects using the tabular data or non-tabular data;
providing an output data file comprising the data objects;
providing an accuracy assessment by comparing the output data file to reference data or ground truth data; and
modifying the machine learning model using at least the accuracy assessment.

9. The method of claim 8, further comprising:
identifying error patterns associated with the output data file;
modifying the machine learning model using at least the error patterns; and
modifying the data extraction module using at least the error patterns.

10. The method of claim 8, further comprising classifying the data files into tabular data, key-value pair data, or value categories.

11. A machine learning based computing system for processing documents, the machine learning (ML) based computing system comprising:
one or more hardware processors; and
a memory coupled to the one or more hardware processors, wherein the memory comprises a plurality of modules in the form of programmable instructions executable by the one or more hardware processors, and wherein the plurality of modules comprises:
a document acquisition module configured to handle the input of the data files in the computing system;
a document scraper module configured for parsing and scraping data from the document;
a content processing module configured for grouping or de-grouping words and phrases found in financial documents;
a noise removal module configured to remove unwanted or irrelevant data from text data;
a content classification ML module configured to extract information from financial documents and classify the extracted information into tabular data and key-value pair data;
a tabular data extraction rule module configured to identify, extract and transform any tabular content present in this labeled content of the document into their columns, rows and corresponding values;
a key value pair data extraction rule module configured to identify and extract keys present in the labeled content and map them to their corresponding values in the document; and
a data output module configured to represent the extracted data to the users and updates other databases with the extracted information.

12. The machine learning based computing system of claim 11, wherein the document scraper module is configured to scrape words, phrases, numbers, special characters and corresponding metadata from data files.

13. The machine learning based computing system of claim 11, wherein the content classification ML module is a fine-tuned transformer-based model, a bidirectional encoder, or a masked visual-language model.

14. The machine learning based computing system of claim 11, wherein the content classification ML module comprises a fine-tuned Layout LM model.

15. The machine learning based computing system of claim 11, further comprises a re-training module configured to integrate with the data extraction pipeline, automatically assess accuracy, generate reports, and provide feedback without manual intervention.
